# EUROPEAN PATENT APPLICATION

(11) **EP 2 234 419 A1**
(43) Date of publication of application: **29.09.2010**
(21) Application number: 08714869.8
(22) Date of filing: 29.02.2008
(51) Int. Cl.: H04W 4/00

(54) **ROAMING DETECTION METHOD AND THE THIRD PARTY ENTITY WHICH IMPLEMENTS THE METHOD**

(30) Priority: 04.01.2008 CN 200810000318
(71) Applicant: ZTE Corporation, Shenzhen, Guangdong 518057 (CN)
(72) Inventor: SHI, Tingxiang, Shenzhen Guangdong 518057 (CN); CAO, Xiaofei, Shenzhen Guangdong 518057 (CN); WANG, Zhen, Shenzhen Guangdong 518057 (CN); TIAN, Huiqin, Shenzhen Guangdong 518057 (CN)
(74) Representative: Guy, Elizabeth
(86) International application number: PCT/CN2008/000415
(87) International publication number: WO 2009/086709

(57) **Abstract**

The present invention discloses a method for roaming detection and a third party entity for implementing the same. The method includes: when a roaming of a user happens, the Visited Location Register, VLR, of the user sending a registration notification request message to a third party entity; the third party entity forwarding the registration notification request message to the Home Location Register, HLR, of the user, obtaining user identification information and VLR identification information from the registration notification request message, judging the roaming situation according to the user identification information and the VLR identification information, and recording the result of the judgment, the user identification information and the VLR identification information; when the third party entity receives a registration notification response message from the HLR, the third party entity judging whether the registration notification response message corresponds to the registration notification request message; and if the result of the judgment is yes, and if the registration notification response message shows that the registration succeeds, the third party entity trigging the roaming service according to the user identification information.

## Description

### Filed of the Invention

The present invention relates to communication field, in particular to a method for roaming detection and a third party entity for implementing the same.

### Background of the Invention

In mobile communication field, quite many roaming users exist not only in the CDMA network and the GSM network but also in the future 3G network. The operators provide the users with roaming information (including the users' current roaming location information and so on) in time, called roaming prompt, which can bring benefit for both the mobile users and the operators. On one hand, the operators usually charge a higher fee for the service happened when the mobile users roam, and the mobile users need to know roaming information to determine whether roaming charges are required; on the other hand, obtaining the users' roaming information accurately and prompting the users of the entry to a certain location are favorable for the operator to develop service propaganda, to develop all kinds of advertisement and so on for marketing, and can also enlarge its popularity and attract the users.

In the prior art, the technology of roaming prompt is implemented either at the terminal or in the network. For the schemes implemented in the network, the triggering of the roaming prompt (i.e., detecting whether the user begins to roam) is completed either at the Visitor Location Register (VLR) or at the Home Location Register (HLR). For example, generally speaking, when a user roams into a certain location and the VLR detects that the user is a roaming user, the VLR sends a short message to a short message center to notify the user of roaming prompting information indicating that he/she has roamed into the location; when the user roams out of the location, the HLR notifies the short message center to send roaming prompting information to the user indicating that he/she has roamed out of the location. The problem brought by this manner lies in that if the roaming prompt service is implemented on a commercial network, all the VLRs and HLRs in the network need to be upgraded for supporting it, while the number of the VLRs is so large that the workload to implement the project is too heavy.

### Summery of the Present Invention

In view of the above-mentioned one or more of problems, the present invention discloses a method for detecting roaming and a third party entity for implementing the method, which aims at realizing roaming detection under the condition without upgrading the VLR and HLR.

The roaming detection method according to the embodiment of the present invention includes: when a roaming of a user happens, Visited Location Register, VLR, of the user sending a registration notification request message to a third party entity; the third party entity forwarding the registration notification request message to the Home Location Register, HLR, of the user, obtaining user identification information and VLR identification information from the registration notification request message, judging the roaming situation according to the user identification information and the VLR identification information, and recording the result of the judgment, the user identification information and the VLR identification information; when the third party entity receives a registration notification response message from the HLR, the third party entity judging whether the registration notification response message corresponds to the registration notification request message; if the result of the judgment is yes, and if the registration notification response message shows that the registration succeeds, the third party entity triggering the roaming service according to the user identification information.

Wherein, if the registration notification response message shows that the registration fails, the third party entity does not trigger the roaming service. If the registration notification response message shows that the registration succeeds, the third party entity also obtaining the VLR identification information from the registration notification response message, and recording the VLR identification information.

Wherein, when the user roams from a visited location A to a visited location B, the third party entity judging that the user roams from the visited location A to the visited location B, by comparing the VLR identification information of the visited location A recorded in the third party entity and the VLR identification information of the visited location B which is obtained from the registration notification request message form the visited location B.

Wherein, when the user roams from a home location to a visited location or comes back to the home location from the visited location, the third party entity judging that the user roams from the home location to the visited or roams back to the home location from the visited location by comparing the VLR identification information and the user identification information obtained from the registration notification request message form the VLR.

The third party entity which is used to implement the method according to the embodiment of the present invention includes: a message forwarding unit, an information obtaining unit, a situation judging unit, and a service triggering unit. Wherein, the message forwarding unit is configured to forward the VLR registration notification request message came from the user to the HLR of the user; the information acquisition unit is configured to obtain the user identification information and the VLR identification information from the registration notification request message; the situation judging unit is configured to judge the roaming situation of the user according to the user identification information and the VLR identification information, and record the result of the judgment, the user identification information and VLR identification information; the service triggering unit is configured to judge whether the registration notification response message corresponds to the registration notification request message when the third party receives the registration notification response message from the HLR, and to trigger the roaming service according to the user identification information if the result of the judgment is yes and if the registration notification response message shows that the registration succeeds.

Wherein, if the user roams from the visited location A to a visited location B, through the comparison between the VLR identification information of the visited location A recorded in the situation judgment unit and the VLR identification information of the visited location B which is obtained from the VLR registration notification request message of the visited location B, the situation judging unit judges that the user roams from the visited location A to the visited location B.

Wherein, the third party entity is an independent entity, and is butt-jointed with the VLR and/or the HLR through a mobile application protocol interface. Alternatively, the third party entity can be an entity which is combined with a signaling transfer point/HLR.

All in all, the present invention realizes the roaming detection method which does not rely on the upgrading of the VLR and HLR.

### Brief Description of the Drawings

The drawings illustrated herein provide a further understanding to the present invention and constitute a part of the application. The exemplary embodiments of the present invention and the explanation thereof are given thereafter by way of illustration only, and thus are not limitative of the present invention, and in the drawings:
Fig.1 is a flowchart of a process of roaming detection when the user roams out of the home location according to the embodiment of the present invention;
Fig.2 is a flowchart of a process of roaming detection when the user roams back to the home location according to the embodiment of the present invention;
Fig.3 is a flowchart of a process of roaming detection when the user roams from a visited location A to a visited location B according to the embodiment of the present invention; and
Fig.4 is a block diagram of the third party entity which is configured to implement the methods as shown in Fig.1-Fig.3 according to the embodiment of the present invention.

### Detailed Description

A method for roaming detection according to the embodiments of the present invention realizes the method for roaming detection which does not rely on the upgrading of the VLR and HLR, and specifically comprises the following steps:
Step 1, when a roaming of a user happens, the Visited Location Register (VLR) of a roaming location sends a registration notification request to the third party entity (RSD);
Step 2, the RSD detects the registration notification request, and forwards the registration notification request to a Home Location Register (HLR);
Step 3, the HLR returns the registration notification response message, and the RSD detects the registration notification response message, and completes the following actions:
   If the registration notification response message returned from the HLR corresponds to the response message of the registration notification request message waiting for detection, and if the response message shows that the registration succeeds, the RSD records the latest VLR identification information registered by the user, and triggers related roaming services such as roaming prompt and so on, RSD forwards the registration notification response message to the VLR; if the response message shows that the registration fails, the RSD clears the record of the registration notification request waiting for detection, and does not trigger the related roaming services such as roaming prompt and so on.

The embodiments of the present invention will be detailed hereinafter and reference will be made to the drawings.

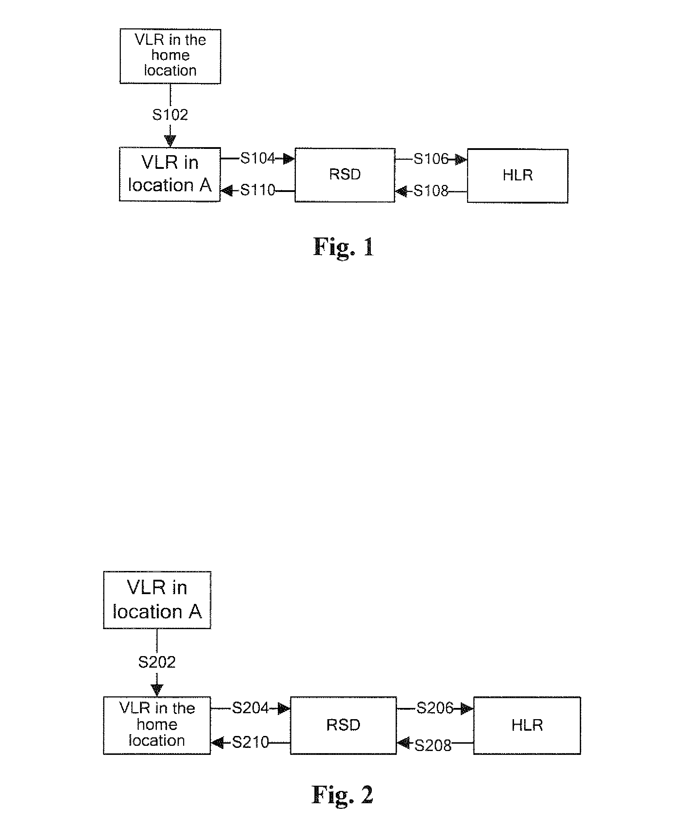

Referring to Fig.1, it is illustrated the process of roaming detection when the user roams out of the home location according to an embodiment of the present invention. As shown in Fig.1, the process comprises the following steps: S102, the user roams out of the home location and enters a location A; S104, the VLR of the location A sends the registration notification request message to the RSD; S106, the RSD forwards and detects the registration notification request message, obtains user number and VLR identification information, judges that the user roams out of the home location , and records the information, waits for the registration notification response message; S108, the RSD detects the registration notification response message, judges whether the registration notification response message corresponds to the response message of the registration notification request message waiting for detection, records the latest VLR identification information registered by the user, and triggers related roaming services such as roaming prompt (e.g. to instruct a short message center to notify the user that he/she has roamed out of the home location , has roamed into location A and so on) if the judgment result is yes and if the registration notification response message shows that the registration succeeds; or clears the record of the registration notification request message waiting for detection, and does not trigger the related roaming services such as roaming prompt and so on, if the registration notification response message shows that the registration fails; S110, the RSD forwards the registration notification response message to VLR A.

Referring to Fig.2, it is illustrated the process of roaming detection when the user roams back to the home location according to an embodiment of the present invention. As shown in Fig.2, the process comprises the following steps: S202, the user roams back to the home location from a location A; S204, the VLR of the home location sends the registration notification request message to the RSD; S206, the RSD forwards and detects the registration notification request message, obtains user number and VLR identification information, judges that the user roams back to the home location , and records the information, waits for the registration notification response message; S208, the RSD detects the registration notification response message, judges whether the registration notification response message corresponds to the response message of the registration notification request, records the latest VLR identification information registered by the user, and triggers relative roaming services such as roaming prompt (e.g. to instruct a short message center to notify the user that he/she has roamed back to the home location , has roamed out of location A and so on) if the judgment result is yes and if the registration notification response message shows that the registration succeeds; or clears the record of the registration notification request message waiting for detection, and does not trigger the related roaming services such as roaming prompt and so on, if the registration notification response message shows that the registration fails; S210, the RSD forwards the registration notification response message to the VLR.

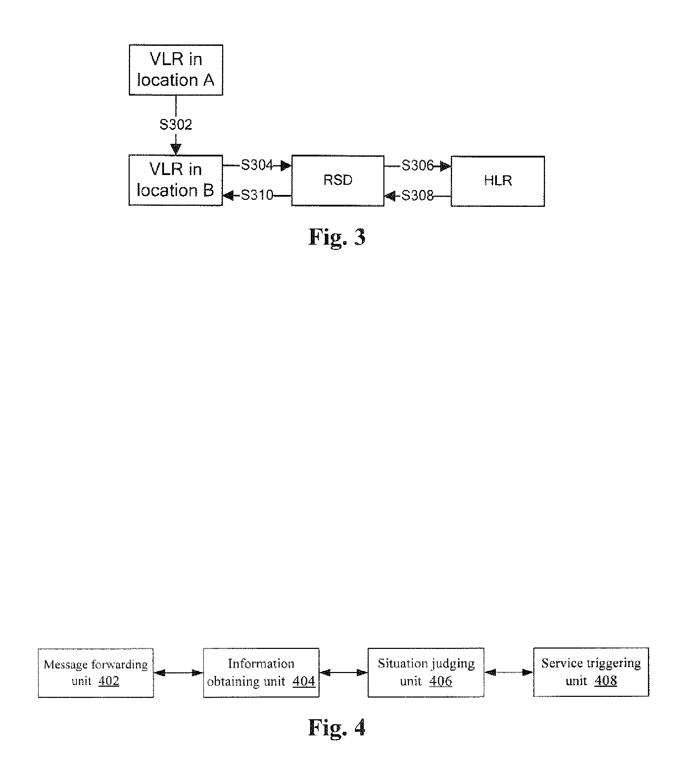

Referring to Fig.3, it is illustrated the process of roaming detection when the user roams from a visited location A to a visited location B according to an embodiment of the present invention. As shown in Fig.3, the process comprises the following steps: S302, the user roams from the visited location A to the visited location B; S304, the VLR of location B sends the registration notification request message to the RSD; S306, the RSD forwards and detects the registration notification request message, obtains user number and VLR identification information, judges that the user roams from the visited location A to the visited location B, and records the information, waits for the registration notification response message; S308, the RSD detects the registration notification response message, judges that this is a response message corresponding to the record of the registration notification request message waiting for detection, and the response message shows that the registration succeeds, then records the latest VLR identification information registered by the user, and compares it with the originally recorded VLR identification information of location A, triggers related roaming services such as roaming prompt (e.g. to instruct the short message center to notify the user that he/she has roamed to location B, has roamed out of location A and so on) if the latest VLR identification information belongs to a different location; or if the registration notification response message shows that the registration fails, clears the record of the registration notification request message waiting for detection, and does not trigger the related roaming services such as roaming prompt and so on, ; S310, the RSD forwards the registration notification response message to the VLR.

Referring to Fig.4, it is illustrated the third party entity which is configured to implement the methods as shown in Fig.1-Fig.3 according to an embodiment of the present invention. As shown in Fig.4, the third party entity includes: a message forwarding unit 402, configured to forward the VLR registration notification request message came from the user to the HLR of the user; an information obtaining unit 404, configured to obtain the user identification information and the VLR identification information from the registration notification request message; a situation judging unit 406, configured to judge the roaming situation of the user according to the user identification information and the VLR identification information, and record the result of the judgment, the user identification information and the VLR identification information; and a service triggering unit 408, configured to judge whether the registration notification response message corresponds to the registration notification request message when the third party receives the registration notification response message from the HLR, and to trigger the roaming service according to the user identification information if the result of the judgment is yes, and if the registration notification response message shows that the registration succeeds.

Wherein, the third party entity refers to an entity rather than the VLR and HLR, which can be an independent entity and can also be combined with other entities, and the combined entity includes but not limited to signaling transfer point, the HLR and so on.

Wherein, under the condition of existing network resources, if the third party entity is set up singly, the influence to existing network can be minimized upon providing the roaming service as long as the data configuration of the HLR is modified, the registration notification response message is routed to the third party entity, and the data configuration of the VLR is modified, the registration notification request is routed to the third party entity.

Wherein, under the condition of existing network resources, if the third party entity is combined with the VLR, there is no need to modify the data configuration of the VLR and HLR, but only to upgrade the VLR so that the functions of the third party entity can be included.

Wherein, the functions of the third party entity at least comprises the detection of the registration notification request and response message, the determination of whether the user begins to roam, and the triggering of the related roaming service such as roaming prompt and so on.

Wherein, if the third party entity is set up singly, it needs to support a mobile application protocol interface, which is used to butt-joint with the VLR and the HLR.

In addition, the third party entity needs to send the registration message to the HLR directly or indirectly. "Directly" means the third party entity sends it to the HLR directly; "indirectly" means the third party entity does not send it to the HLR directly, but forwards it to the HLR through one or more devices.

Wherein, the third party entity needs to judge whether a roaming of a user happens according to the registration notification request message, and adopts different routing strategies for roaming situation and non-roaming situation. For example, routes it to the HLR under non-roaming situation, and sends it to the roaming service devices and so on.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. A roaming detection method , **characterized by**, comprising:
when a roaming of a user happens, the Visited Location Register, VLR, of the user sending a registration notification request message to a third party entity;
the third party entity forwarding the registration notification request message to the Home Location Register, HLR, of the user, obtaining user identification information and VLR identification information from the registration notification request message, judging the roaming situation according to the user identification information and the VLR identification information, and recording the result of the judgment, the user identification information and the VLR identification information;
when the third party entity receives a registration notification response message from the HLR, the third party entity judging whether the registration notification response message corresponds to the registration notification request message; and
if the result of the judgment is yes, and if the registration notification response message shows that the registration succeeds, the third party entity trigging the roaming service according to the user identification information.

2. The method according to Claim 1 , **characterized in that** if the registration notification response message shows that the registration fails, the third party entity does not trigger the roaming service.

3. The method according to Claim 1 or 2 , **characterized in that** if the registration notification response message shows that the registration succeeds, the third party entity also obtaining the VLR identification information from the registration notification response message, and recording the VLR identification information.

4. The method according to Claim 3 , **characterized in that** when the user roams from a visited location A to a visited location B, the third party entity judging that the user roams from the visited location A to the visited location B by comparing the VLR identification information of the visited location A recorded in the third party entity and the VLR identification information of the visited location B which is obtained from the registration notification request message from the VLR of the visited location B.

5. The method according to Claim 3, **characterized in that** when the user roams from a home location to a visited location or comes back to the home location from the visited location, the third party entity judging that the user roams from the home location to the visited or roams back to the home location from the visited location by comparing the VLR identification information and the user identification information obtained from the registration notification request message from the VLR.

6. A third party entity which implements any one of the above-mentioned methods, **characterized by**, comprising:
a message forwarding unit, configured to forward the VLR registration notification request message came from the user to the HLR of the user;
an information obtaining unit, configured to obtain the user identification information and the VLR identification information from the registration notification request message;
situation judging unit, configured to judge the roaming situation of the user according to the user identification information and the VLR identification information, and record the result of the judgment, the user identification information and VLR identification information; and
service triggering unit, configured to judge whether the registration notification response message corresponds to the registration notification request message, when the third party receives the registration notification response message from the HLR, and to trigger the roaming service according to the user identification information if the result of the judgment is yes and if the registration notification response message shows that the registration succeeds.

7. The third party entity according to Claim 6, **characterized in that** if the user roams from a visited location A to a visited location B, the situation judging unit judges that the user roams from the visited location A to the visited location B through the comparison between the VLR identification information of the visited location A recorded in the situation judgment unit and the VLR identification information of the visited location B which is obtained from the VLR registration notification request message of the visited location B.

8. The third party entity according to Claim 6 or 7, **characterized in that** the third party entity is an independent entity.

9. The third party entity according to Claim 8, **characterized in that** the third party entity is butt-jointed with the VLR and/or the HLR through a mobile application protocol interface.

10. The third party entity according to Claim 6 or 7, **characterized in that** the third party entity is an entity which is combined with a signaling transfer point/HLR.
